(19) Europäisches Patentamt
European Patent Office
Office européen des brevets

(11) Publication number: 0 327 309
A2

(12) EUROPEAN PATENT APPLICATION

(21) Application number: 89300925.8

(22) Date of filing: 31.01.89

(51) Int. Cl.4: G 06 F 11/10

(30) Priority: 31.01.88 JP 20193/88

(43) Date of publication of application:
09.08.89 Bulletin 89/32

(84) Designated Contracting States: DE FR GB IT

(71) Applicant: NEC CORPORATION
33-1, Shiba 5-chome, Minato-ku
Tokyo 108 (JP)

(72) Inventor: Kanauchi, Shushi
c/o NEC Corporation, 33-1, Shiba 5-chome
Minato-ku, Tokyo (JP)

(74) Representative: Brown, David Alan et al
MATHYS & SQUIRE 10 Fleet Street
London EC4Y 1AY (GB)

(54) Memory apparatus having error correction function.

(57) A memory apparatus having an error correction function, comprises an error correction code generator/checker having a first input for receiving the information to be stored from a data input circuit and a second input. The error correction code generator/checker operates to generator an error correction code on the basis of the information to be stored in the case of writing and to generate an error code on the basis of signals inputted to the second input in the case of reading. A memory section is coupled to the data input circuit and an output of the error correction code generator/checker so as to store the information to be stored and a corresponding error correction code at a designated location of the memory section. A reading circuit is connected to the memory section to read information and an associated error correction code from the memory section for outputting the read-out information and associated error correction to second input of the error correction code generator/checker. A decoder is coupled to the error correction code generator/checker to receive the error code from the error correction code generator/checker and to generate a decoded signal. An error correction circuit is connected to receive an information portion of the read-out signal from the reading circuit so as to correct the received information on the basis of the decoded signal from the decoder. A control circuit is provided for maintaining the data input circuit in an active condition and the reading circuit and the decoder in an inactive condition in the case of writing and on the other hand for maintain the data input circuit in an inactive condition and the reading circuit and decoder in an active condition in the case of reading.

FIGURE 4

**Description**

## MEMORY APPARATUS HAVING ERROR CORRECTION FUNCTION

Background of the Invention

Field of the Invention

The present invention relates to a memory apparatus having an error correction function, and more specifically to a memory apparatus having an error correction function of a small scale and a simple construction.

Description of related art

Hitherto, memory apparatuses having an error correction function have been constructed such that, in the case of writing, an information code to be stored is stored to a memory medium together with an error correction code (ECC), and on the other hand, in the case of reading, both the information code and the correction code are read out and the read-out information code is checked with reference to the read-out error correction code. For example, in the case of one-bit correction and two-bit error detection (single error correcting and double error detecting) type circuit, if an error of one bit exists, the error is corrected, and if an error of two bits exists, the error is found or detected.

The memory apparatus having the conventional error correction function as mentioned above has been ordinarily composed of a data input circuit, an error correction code (EEC) generator connected to receive data to be stored through the data input circuit, a memory section connected to receive the data to be stored through the data input circuit and an error correction code from the error correction code generator. Further, the memory apparatus also includes a reading circuit connected to read the information and the associated error correction code stored in the memory section, an error checker (ECC checker) coupled to receive the read-out information and error correction code, a decoder coupled to the error checker for indicating an error bit, and an error correction circuit connected to receive the read-out information through the reading circuit and an output of the decoder. The above circuits are controlled by one control circuit so that a writing operation and a reading operation are timed.

Generally, it can be said that, the larger the memory capacitor becomes, the larger the size of the circuit also becomes. As seen from the above, comparing the memory apparatus having the error correction function with a memory apparatus provided with no error correction function, the memory apparatus having the error correction function needs the error correction code generator, the memory section, the error checker the decoder, and the error correction circuit, and wirings for those circuits. Therefore, an adverse influence caused by the increase of the memory capacity will remarkably appear in the memory apparatus having the error correction function as compared with the memory apparatus provided with no error correction function. For example, the cost of the memory apparatus will be greatly increased.

More specifically, the error correction code generator and the error checker have been constructed in the form of a matrix, and therefore, possibility of generation of wiring defects and/or a logic design error exists at the same probability in the error correction code generator and the error checker. In addition, the more the logic gate or matrix becomes complicated, a risk of error in the circuit will be increased. For example, assuming that the risk rate of the error correction code generator is $\gamma(\ll 1)$, the risk rate of the error checker should similarly be $\gamma$, and therefore, the overall risk rate "R" of the memory apparatus should become $[R = 1 - (1-\gamma)^2]$. Namely, the overall risk rate becomes about double of the risk rate of each circuit, since $\gamma \ll 1$.

Summary of the Invention

Accordingly, it is an object of the present invention to provide a memory apparatus having an error correction function which has overcome the above mentioned defect of the conventional one.

Another object of the present invention is to provide a memory apparatus having an error correction circuitry having a simple construction and capable of reducing the probability of wiring error and/or design error.

A further object of the present invention is to provide a memory apparatus having an error correction circuitry of a simple construction capable of reducing the probability of wiring error and/or design error by about half.

The above and other objects of the present invention are achieved in accordance with the present invention by a memory apparatus having an error correction function, comprising a data input circuit for receiving information to be stored, an error correction code generator/checker having a first input for receiving the information to be stored from the data input circuit and a second input, the error correction code generator/checker operating to generate an error correction code on the basis of the information to be stored in the case of writing and to generate an error code, on the basis of signals inputted to the second input in the case of reading, a memory section coupled to the data input circuit and an output of the error correction code generator/checker so as to store the information to be stored and a corresponding error correction code at a designated location of the memory section, a reading circuit connected to the memory section to read information and an associated error correction code from a designated location of the memory section for outputting the the read-out information and associated error correction to the second input of the error correction code generator/checker, a decoder coupled to the error correction code generator/checker to receive the error code from the error correction code generator/checker and to generate a decoded signal, an error correction circuit connected to receive an information portion of the read-out signal from the reading circuit so as to correct the received information on the basis of the decoded signal from the decoder, and a control circuit for maintaining the data input circuit in an active condition and the reading circuit and the decoder in an inactive condition in the case of writing and on the other hand for maintain the data input circuit in an inactive condition and the reading circuit and decoder in an active condition in the case of reading.

In a preferred embodiment, the error correction code generator/checker includes a plurality of input lines and at least a pull-down transistor connected to a line of the input lines which is connected to the output of the reading circuit but not connected to the output of the data input circuit, the pull-down transistor being controlled by the control circuit so as to be maintained in an ON condition in the case of the writing and in an OFF condition in the case of the reading.

More specifically, in the case of writing, an output of the data input circuit is brought into an active condition and respective outputs of the reading circuit and the decoder are brought into a high impedance condition, and in the case of reading, the output of the data input circuit is brought into a high impedance condition and the respective outputs of the reading circuit and the decoder are brought into an active condition

More preferably, the error correction code generator/checker includes a plurality of information input lines and a plurality of error correction code input lines, and each of the error correction code input lines is connected to a pull-down transistor which is controlled by the control circuit so as to be maintained in an ON condition in the case of the writing and in an OFF condition in the case of the reading.

The above and other objects, features and advantages of the present invention will be apparent from the following description of preferred embodiments of the invention with reference to the accompanying drawings.

Brief Description of the Drawings

Figure 1 is a block diagram of a conventional memory apparatus having an error correction circuitry;

Figures 2A and 2B illustrate examples of a Hamming code for error correction;

Figure 3 is a diagram illustrating an example of an error correction code;

Figure 4 is a block diagram of one embodiment of a memory apparatus having an error correction circuitry in accordance with the present invention; and

Figure 5 is a detailed circuit diagram of an error correction code generator/checker used in the circuitry shown in Figure 4.

Description of the Preferred embodiments

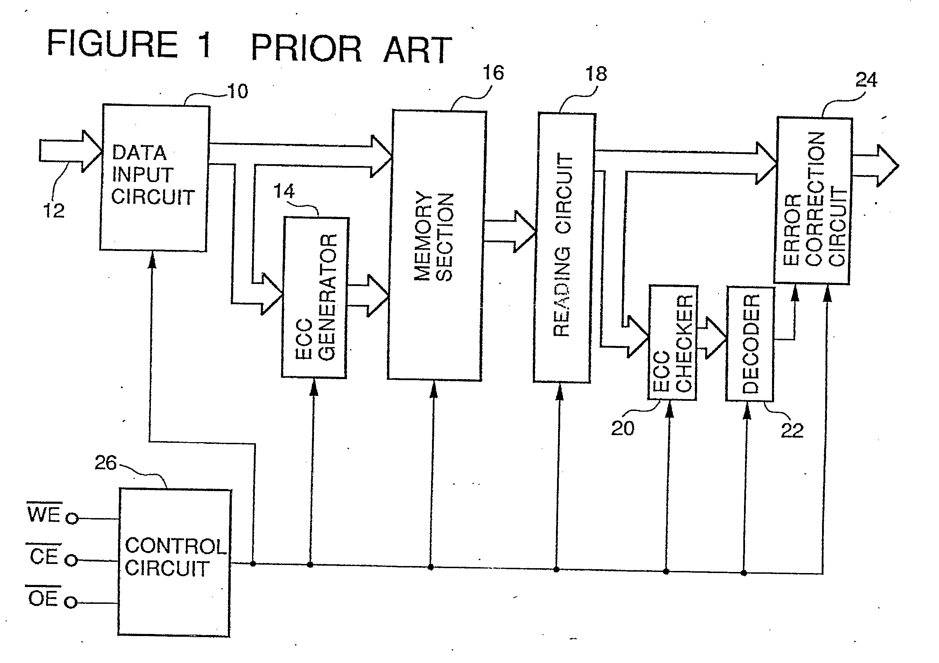

Referring to Figure 1, there is shown a diagram of a conventional memory apparatus having an error correction circuitry. The shown apparatus includes a data input circuit 10 receiving information to be stored through a bus 12, an error correction code (ECC) generator 14 connected to receive the information to be stored through the data input circuit 10, and a memory section 16 connected to receive the information to be stored through the data input circuit 10 and an error correction code (ECC) from the error correction code generator 14. Further, the memory section 16 is associated with a reading circuit 18 connected to read the information and the error correction code stored in the memory section 16. An error checker (ECC checker) 20 is coupled to receive the read-out information and error correction code, and a decoder 22 coupled to the error checker 20 for indicating an error bit. An error correction circuit 24 is connected to receive the read-out information through the reading circuit 18 and an output of the decoder 22. The above circuits 10 and 14 to 24 are controlled by a control circuit 26 so that a writing operation and a reading operation are timed.

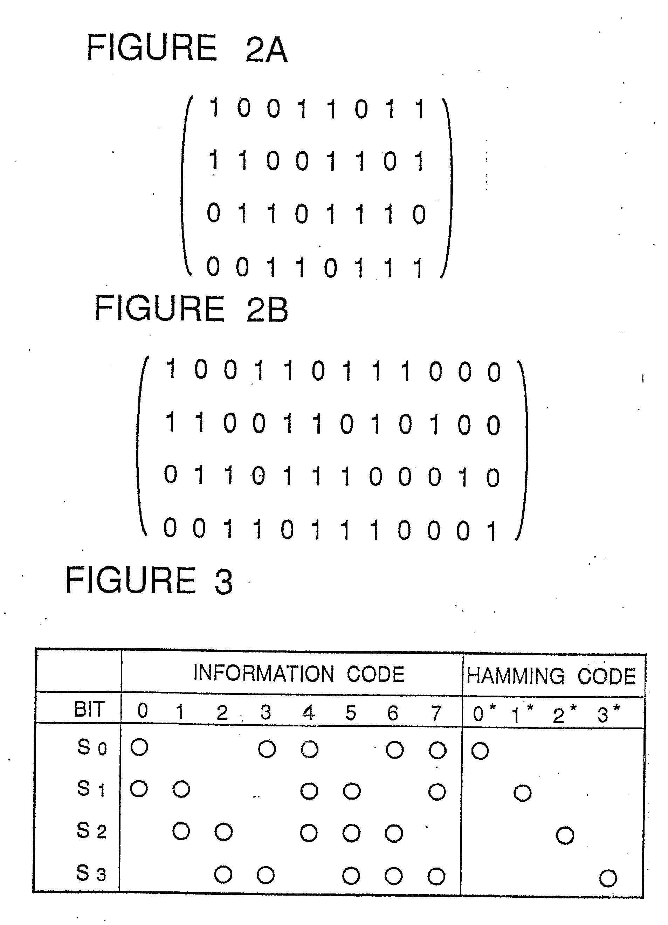

In the case of writing, the ECC generator 14 receives the information to be stored, for example 8-bit information, through the data input circuit 10, and generates a four-bit Hamming code as an error detection and correction code in accordance with an ECC generation matrix in the form of a Hamming code as shown in Figure 2A. The four-bit Hamming code thus generated is written together with the information to be stored, to a designated location of the memory section 16.

On the other hand, in the case of reading, information to be read and a Hamming code (ECC) are read out from a designated location of the memory section 16 by action of the reading circuit 18. The ECC checker 20 generates a syndrome (error code) on the basis of the read-out information and an ECC checking matrix as shown in Figure 2B. The syndrome is analyzed by the decoder 22 so that presence of an error bit or bits are indicated if exists. If the error is only one bit, the error correction circuit 24 operates to correct the one-bit error.

Each of the ECC generator 14 and the ECC checker 20 is composed of a parity generating circuit constructed in accordance with a matrix for generation of an error correction parity, and the decoder 22 is for analyzing an error position in accordance with the error correction parity generation matrix. In addition, the error correction circuit 24 is ordinarily constituted of circuits for obtaining an exclusive-OR between the read-out information code and a syndrome decoded by the decoder 22.

Turning to Figure 3, there is shown one example of the Hamming code for illustrating the error detection and correction operation in the case that information "D" of one byte (8 bits) are added with a Hamming code "C" of 4 bits. The ECC generator 14 operates to calculate an exclusive-OR among five bits selected from the input 8-bit information "D", which selected bits are marked by circles in Figure 3. As a result, the ECC generators 14 generates a Hamming code "C" of one bit for each one row. On the other hand, the ECC checker 20 receives 12 bits composed of the information "D" and the associated Hamming code "C" read out from the memory section 16, and obtains an exclusive-OR for six bits selected from the 12 bits as marked by the circles in shown in Figure 3, so that error codes $S_0$ to $S_3$ are introduced. The error codes are decoded by the decoder 22 so that a position of one bit error is determined. Incidentally, positions given with no circle mark in Figure 3 are not concerned in the error detection and correction.

As mentioned hereinbefore, however, if the memory apparatus including the error correction circuitry is increased in the memory capacity, the scale of the required circuitry will be inevitably increased. Namely, the above mentioned memory apparatus having the error correction function needs the error correction code generator, the memory section, the error checker the decoder, and the error correction circuit, and wirings for those circuits, differently from a memory apparatus provided with no error correction function. Therefore, an adverse influence caused by the increase of the memory capacity will remarkably appear in the memory apparatus having the error correction function, and particularly, the cost of the memory apparatus will be greatly increased.

As mentioned above, possibility of wiring defects and/or a logic design error exists at the same probability in the error correction code generator 14 and the error checker 20 both of which are constructed in the form of a matrix. In addition, the more the logic gate or matrix becomes complicated, a risk of error in the circuit will be increased. For example, assuming that the risk rate of the error correction code generator is 0.1 ($\gamma = 0.1$), the risk rate of the error checker should similarly to 0.1 ($\gamma = 0.1$), and therefore, the overall risk rate "R" of the memory apparatus should become 0.19 [$R = 1 - (1-\gamma)^2$]. Namely, the overall risk rate becomes about double of the risk rate of each circuit.

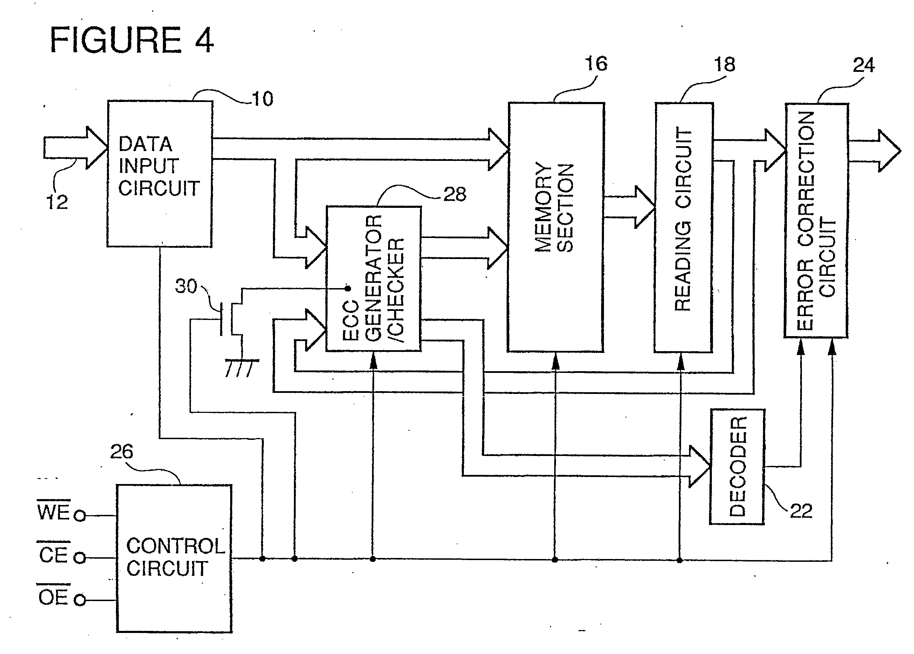

Referring to Figure 4, there is shown a block diagram of one embodiment of a memory apparatus having an error correction circuitry in accordance with the present invention. In Figure 4, circuit elements similar to those shown in Figure 1 are given the same Reference Numerals, and therefore, detailed explanation thereof will be omitted.

As will be seen from comparison between Figures 1 and 4, the memory apparatus shown in Figure 4 is characterized by provision of an error correction code (ECC) generator/checker 28 common to an error correction code generation and an error checking. This ECC generator/checker 28 comprises four 6-input exclusive-OR circuits 32, 34, 36 and 38, whose inputs are connected to six lines respectively selected from 12 bit lines composed of eight data bit lines "0" to "7" and four correction code bit lines "0*" to "3*", as shown in the drawing. Input terminals of these exclusive-OR circuits 32, 34, 36 and 38 which are not used or required in the case of writing, are pulled down to a low level by a pull down transistor 30. The pull-down transistor is provided one for one line which should be pulled down in the case of writing, but for simplification of the drawing, these transistors are symbolically indicated by only one transistor 30. In addition, the ECC generator/checker 28 and the pull-down transistor 30 are controlled by the control circuit 26.

The output of the data input circuit 10 and the output of the reading circuit 18 are coupled to an input of the ECC generator/checker 28 through a wired-OR connection. Therefore, the data input circuit 10 and the reading circuit 18 are of a so-called tristate output type, so that the output of the data input circuit 10 and the output of the reading circuit 18 are alternatively put into a high impedance condition, with the result that the output of the data input circuit 10 and the output of the reading circuit 18 will not interfere to each other at the input of the ECC generator/checker 28.

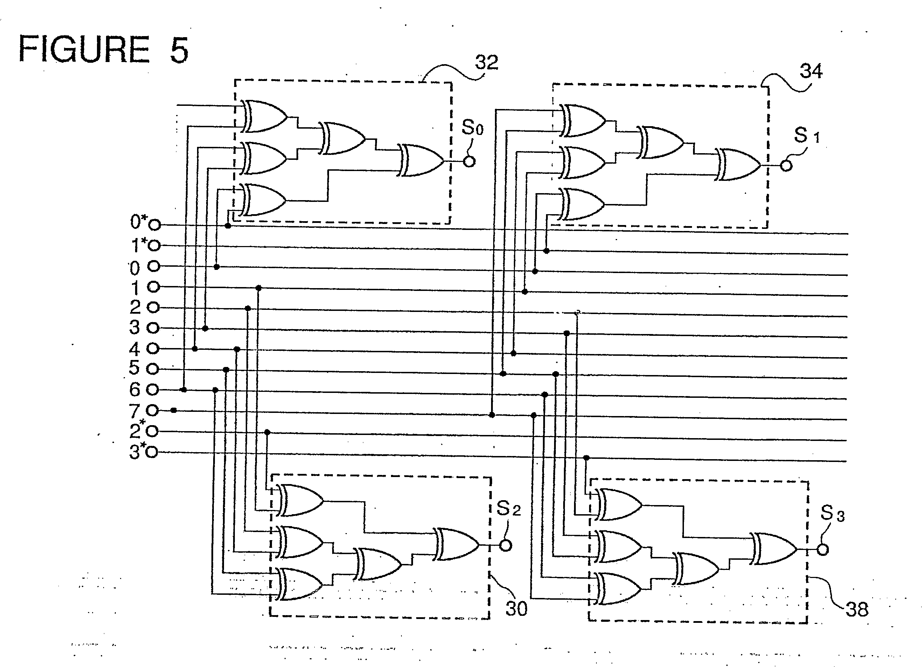

In the case of the writing, if a write enable signal $\overline{WE}$, a chip selection signal $\overline{CE}$ and an output enable signal $\overline{OE}$ which are applied to the control circuit 26 fulfil a requirement for the writing, the control circuit 26 controls the data input circuit 10 so as to bring an output of the input circuit from a high impedance condition into an active condition. Thus, information of 8 bits supplied through the bus 12 to the input circuit 10 are applied to the memory section 16 and to the ECC generator/checker 28. At this time, input lines of the the ECC generator/checker 28 corresponding to the Hamming code bits (bits 0* to 3*) are fixed to the low level by the pull-down transistor 30. Therefore, the four 6-input exclusive-OR circuits shown in Figure 5 functions as five-input exclusive-OR circuit equivalent to an ECC generation matrix of the Hamming code shown in Figure 2A. The input of the ECC generator/checker 28 is coupled to the output of the reading circuit 18, but the output of the reading circuit 18 is brought into a high impedance condition under control of the control circuit when the circuitry is in a writing mode. Therefore, the ECC generator/checker 28 is not influenced by the output of the reading circuit in the case of the writing. On the other hand, an output of the ECC generator/checker 28 is supplied to the memory section 16 and the decoder 22. In the case of writing, the memory section 24 is put in an active condition by the control circuit 26, so that the input information supplied from the input circuit 10 and the ECC code outputted from the ECC generator/checker 28 are written into the memory section 16. However, in the case of the writing, the decoder is maintained in an inactive condition under control of the control circuit 26, and therefore, the circuit will retain its initial condition.

When the memory apparatus is put in a reading condition, the circuitry shown will operate as follows: Under control of the control circuit 26, the data input circuit 10 is maintained in an inactive condition or in a high impedance output condition. In addition, the pull-down transistor 30 is maintained in in inactive condition or in an off condition. On the other hand, the reading circuit 18 is put in an active condition, and operates to read, from the memory section 16, the stored signal of 12 bits in total composed of the information of 8 bits and the associated ECC code of 4 bits. The 8-bit information portion of the 12-bit read-out signal is supplied to the error correction circuit 24, and on the other hand, all 12 bits of the read out signal are inputted to the ECC generator/checker 28. The ECC generator/checker 28 operates to generate a syndrome (error code) of 4 bits on the basis of the received 12-bit signal under control of the control circuit 26. The syndrome thus generated is inputted to the decoder 22 which is maintained in an active condition under the control of the control circuit 26. A decoded signal outputted from the decoder 22 is supplied to the error correction circuit 24.

The above mentioned embodiment processes information of 1-byte/8-bits, but the present invention is not limited to the disclosed embodiment. The shown embodiment can handle 4-bit data, 16-bit data and 32-bit data by partially modifying the ECC generator/checker 28.

In addition, the above mentioned embodiment is of the one-bit error correction and two-bit error detection type, but the present invention can be applied to the other type error correction systems, for example, one-bit and two-bit error detection type or one bit and two-bit error correction type.

In the above embodiment, furthermore, the ECC generation matrix as shown in Figure 2A and the ECC checking matrix as shown in Figure 2B have been used as a Hamming code. But, the other Hamming codes can be used.

As will be apparent from the above description, the memory apparatus having the error correction circuitry in accordance with the present invention includes the ECC generator/checker commonly provided to both an error detection/correction code generation section and an error detection/correction section, so that the number of gates used for the error checking is greatly decreased. Therefore, the memory apparatus having the error correction function can be obtained at a relatively low cost. Further, the common circuit would lead to decrease of required test patterns and shortening of a required test time, and also, will reduce the risk rate of the circuitry design.

The invention has thus been shown and described with reference to the specific embodiments. However, it should be noted that the present invention is in no way limited to the details of the illustrated structures but changes and modifications may be made within the scope of the appended claims.

**Claims**

1. A memory apparatus having an error correction function, comprising a data input circuit for receiving information to be stored, an error correction code generator/checker having a first input for receiving the information to be stored from the data input circuit and a second input, the error correction code generator/checker operating to generate an error correction code on the basis of the information to be stored in the case of writing and to generate an error code on the basis of signals inputted to the second input in the case of reading, a memory section coupled to the data input circuit and an output of the error correction code generator/checker so as to store the information to be stored and a corresponding error correction code at a designated location of the memory section, a reading circuit connected to the memory section to read information and an associated error correction code from a designated location of the memory section for outputting the read-out information and associated error correction to the second input of the error correction code generator/checker, a decoder coupled to the error correction code generator/checker to receive the error code from the error correction code generator/checker and to generate a decoded signal, an error correction circuit connected to receive an information portion of the read-out signal from the reading circuit so as to correct the received information on the basis of the decoded signal from the decoder, and a control circuit for maintaining the data input circuit in an active condition and the reading circuit and the decoder in an inactive condition in the case of writing and on the other hand for maintain the data input circuit in an inactive condition and the reading circuit and decoder in an active condition in the case of reading.

2. An apparatus claimed in Claim 1 wherein the error correction code generator/checker includes a plurality of input lines and at least a pull-down transistor connected to a line of the input lines which is connected to the output of the reading circuit but not connected to the output of the data input circuit, the pull-down transistor being controlled by the control circuit so as to be maintained in an ON condition in the case of the writing and in an OFF condition in the case of the reading.

3. An apparatus claimed in Claim 1 wherein in the case of writing, an output of the data circuit is brought into an active condition and respective outputs of the reading circuit and the decoder are brought into a high impedance condition, and in the case of reading, the output of the data input circuit is brought into a high impedance condition and the respective outputs of the reading circuit and the decoder are brought into an active condition.

4. An apparatus claimed in Claim 1 wherein the error correction code generator/checker includes a plurality of information input lines and a plurality of error correction code input lines, each of the error correction code input lines being connected to a pull-down transistor which is controlled by the control circuit so as to be maintained in an ON condition in the case of the writing and in an OFF condition in the case of the reading.

# FIGURE 1  PRIOR ART

EP 0 327 309 A2

# FIGURE 2A

$$\begin{pmatrix} 1 & 0 & 0 & 1 & 1 & 0 & 1 & 1 \\ 1 & 1 & 0 & 0 & 1 & 1 & 0 & 1 \\ 0 & 1 & 1 & 0 & 1 & 1 & 1 & 0 \\ 0 & 0 & 1 & 1 & 0 & 1 & 1 & 1 \end{pmatrix}$$

# FIGURE 2B

$$\begin{pmatrix} 1 & 0 & 0 & 1 & 1 & 0 & 1 & 1 & 1 & 0 & 0 & 0 \\ 1 & 1 & 0 & 0 & 1 & 1 & 0 & 1 & 0 & 1 & 0 & 0 \\ 0 & 1 & 1 & 0 & 1 & 1 & 1 & 0 & 0 & 0 & 1 & 0 \\ 0 & 0 & 1 & 1 & 0 & 1 & 1 & 1 & 0 & 0 & 0 & 1 \end{pmatrix}$$

# FIGURE 3

| BIT | INFORMATION CODE | | | | | | | | HAMMING CODE | | | |
|---|---|---|---|---|---|---|---|---|---|---|---|---|
| | 0 | 1 | 2 | 3 | 4 | 5 | 6 | 7 | 0* | 1* | 2* | 3* |
| S0 | O | | | O | O | | O | O | O | | | |
| S1 | O | O | | | O | O | | O | | O | | |
| S2 | | O | O | | O | O | O | | | | O | |
| S3 | | | O | O | | O | O | O | | | | O |

# FIGURE 4

EP 0 327 309 A2

# FIGURE 5

EP 0 327 309 A2